# EUROPEAN PATENT SPECIFICATION

(11) **EP 3 875 327 B1**
(45) Date of publication and mention of the grant of the patent: **21.02.2024**
(21) Application number: 18939092.5
(22) Date of filing: 02.11.2018
(51) Int. Cl.: B60Q 1/12, G01C 21/00

(54) **ELECTRONIC DEVICE FOR VEHICLE, OPERATING METHOD OF ELECTRONIC DEVICE FOR VEHICLE**
ELEKTRONISCHE VORRICHTUNG FÜR EIN FAHRZEUG, BETRIEBSVERFAHREN FÜR ELEKTRONISCHE VORRICHTUNG FÜR EIN FAHRZEUG
DISPOSITIF ÉLECTRONIQUE POUR VÉHICULE, PROCÉDÉ D'EXPLOITATION DE DISPOSITIF ÉLECTRONIQUE POUR VÉHICULE

(43) Date of publication of application: 08.09.2021
(73) Proprietor: LG Electronics Inc., Seoul 07336 (KR)
(72) Inventor: KIM, Sungmin, Seoul 06772 (KR); LEE, Jinsang, Seoul 06772 (KR)
(74) Representative: Frenkel, Matthias Alexander
(86) International application number: PCT/KR2018/013236
(87) International publication number: WO 2020/091120

(56) References cited:
- KR-A- 20120 103 546
- KR-A- 20180 000 672
- US-A1- 2002 080 617
- US-A1- 2012 086 582
- US-A1- 2012 232 733
- US-A1- 2015 300 825
- US-A1- 2017 361 759
- US-A1- 2018 186 278
- US-B1- 6 405 128

## Description

### TECHNICAL FIELD

The present invention relates to an electronic device for a vehicle, and a method and system for operating an electronic device for a vehicle.

### BACKGROUND ART

A vehicle refers to a device that carries a passenger in a direction intended by a passenger. A car is a major example of such a vehicle. In the industrial field of vehicles, application of an advanced driver assistance system (ADAS) is under active study to increase the driving convenience of users. Furthermore, the application of autonomous driving of vehicles is also under active study.

The application of ADAS or the application of autonomous driving may be configured based on map data. Conventionally, low-scale standard definition (SD) map data is provided to users while being stored in a memory installed in a vehicle. However, recently, as the need for high-scale high-definition (HD) map data has increased, map data into which a cloud service is integrated has come to be provided to users.

A conventional head lamp for a vehicle determines a direction in which light is emitted in consideration of a steering direction or curvature information of a travel road. However, emission of light using the steering direction or curvature information is merely a process of appropriately setting a direction in which a head lamp emits light and emitting light.

Electronic devices for vehicles that act on head lamps are known from US 2012/232733 A, US 2002/080617 A and US 2018/186278 A.

### DISCLOSURE

### TECHNICAL PROBLEM

To overcome the aforementioned problems, an object of the present invention is to provide an electronic device for a vehicle for emitting light of a head lamp toward a path or an object to allow a user to accurately recognize the same during the nighttime.

Another object of the present invention is to provide a method of operating an electronic device for a vehicle for emitting light of a head lamp toward a path or an object to allow a user to accurately recognize the same during the nighttime.

It will be appreciated by persons skilled in the art that the effects that could be achieved with the present invention are not limited to what has been particularly described hereinabove and other advantages of the present invention will be more clearly understood from the detailed description.

### TECHNICAL SOLUTION

In accordance with the present invention, the above and other objects can be accomplished by the provision of an electronic device for a vehicle, as defined in claim 1, including a power supply configured to supply power, an interface configured to receive high definition (HD) map data of a specified region from a server through a communication device, and at least one processor configured to continuously generate electronic horizon data of the specified region based on the HD map data in a state in which the power is received, and to set a light irradiation region of a head lamp based on the electronic horizon data.

The electronic horizon data may include horizon map data and horizon path data, and the processor may set at least some of a main path and a sub path of the horizon path data in at least one of an intersection or a junction specified in the horizon map data to the light irradiation region.

The electronic horizon data may include static object data comprising information on at least one of a traffic sign indicating information, a speed camera, or a bump, and the processor may set at least one of the traffic sign, the speed camera, or the bump to the light irradiation region.

The electronic horizon data may include dynamic data comprising information on at least one of a pot hole, a slippery road, an off road, or black ice, and the processor may set at least one of the pot hole, the slippery road, the off road, or the black ice to the light irradiation region.

According to the invention, the electronic horizon data includes dynamic data comprising information on a hidden object defined as an object that is not sensed by a sensor, and the processor may set a point at which the hidden object is located to the light irradiation region.

The present invention also provides a method of operating an electronic device for a vehicle as defined in claim 5.

Details of other embodiments are included in detailed descriptions and drawings.

### ADVANTAGEOUS EFFECTS

As is apparent from the foregoing description, the embodiments of the present invention have the following one or more effects.

A user may accurately recognize a path and an object while driving a vehicle during the nighttime by setting a light irradiation region of a head lamp based on electronic horizon data.

It will be appreciated by persons skilled in the art that the effects that could be achieved with the present invention are not limited to what has been particularly described hereinabove and other advantages of the present invention will be more clearly understood from the following claims.

### DESCRIPTION OF DRAWINGS

FIG. 1 is a diagram showing a vehicle that travels on a road according to an embodiment of the present invention.
FIG. 2 is a diagram for explaining a system according to an embodiment of the present invention.
FIG. 3 is a diagram for explaining a vehicle including an electronic device according to an embodiment of the present invention.
FIG. 4 is diagram showing an example of the outer appearance of an electronic device according to an embodiment of the present invention.
FIGs. 5A to 5C are flowcharts of a signal inside a vehicle including an electronic device according to an embodiment of the present invention.
FIGs. 6A and 6B are diagrams for explaining an operation of receiving high-definition (HD) map data according to an embodiment of the present invention.
FIG. 6C is a diagram for explaining an operation of generating electronic horizon data according to an embodiment of the present invention.
FIG. 7 is a flowchart of an electronic device according to an embodiment of the present invention.
FIGs. 8 to 14 are diagrams for explaining an operation of an electronic device according to an embodiment of the present invention.

### BEST MODE

Reference will now be made in detail to exemplary embodiments of the present invention, examples of which are illustrated in the accompanying drawings. The suffixes "module" and "unit" of elements herein are used for convenience of description and thus can be used interchangeably, and do not have any distinguishable meanings or functions. In the following description of the at least one embodiment, a detailed description of known functions and configurations incorporated herein will be omitted for the purposes of clarity and brevity. The features of the present invention will be more clearly understood from the accompanying drawings, and should not be understood to be limited by the accompanying drawings.

It will be understood that, although the terms "first", "second", "third" etc. may be used herein to describe various elements, these elements should not be limited by these terms. These terms are only used to distinguish one element from another element.

It will be understood that when an element is referred to as being "on", "connected to" or "coupled to" another element, it may be directly on, connected to or coupled to the other element, or intervening elements may be present. In contrast, when an element is referred to as being "directly on," "directly connected to" or "directly coupled to" another element or layer, there are no intervening elements present.

Singular expressions in the present specification include the plural expressions unless clearly specified otherwise in context.

It will be further understood that the terms "comprises" or "comprising" when used in this specification specify the presence of stated features, integers, steps, operations, elements, or components, but do not preclude the presence or addition of one or more other features, integers, steps, operations, elements, components, or groups thereof.

In the description below, the left side of the vehicle means the left side with respect to the travel direction of the vehicle and the right side of the vehicle means the right side with respect to the travel direction of the vehicle.

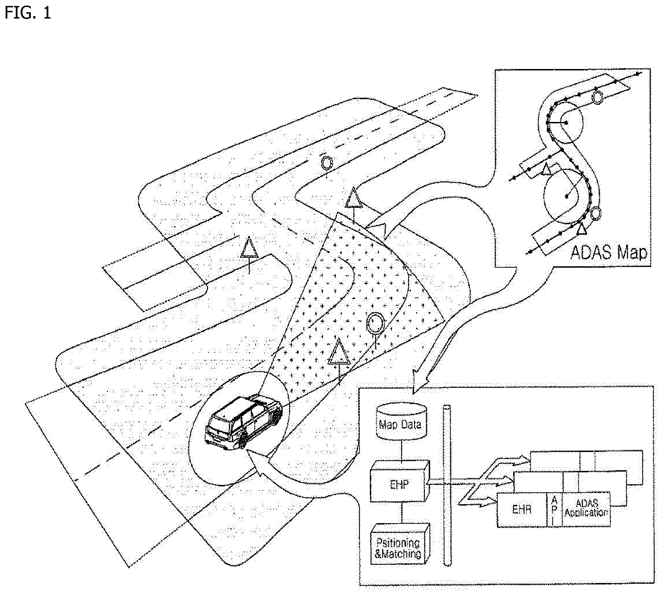

FIG. 1 is a diagram showing a vehicle that travels on a road according to an embodiment of the present invention.

Referring to FIG. 1, a vehicle 10 according to an embodiment may be defined as a form of a transport that travels on a road or rails. The vehicle 10 may be interpreted as including an automobile, a train, or a motorcycle. Hereinafter, an autonomous driving vehicle that travels without driver manipulation for driving or a vehicle including an advanced driver assistance system (ADAS) will exemplify the vehicle 10.

The vehicle described in this specification may include a vehicle equipped with an internal combustion engine as a power source, a hybrid vehicle equipped with both an engine and an electric motor as a power source, and an electric vehicle equipped with an electric motor as a power source.

The vehicle 10 may include an electronic device 100. The electronic device 100 may be referred to as an electronic horizon provider (EHP). The electronic device 100 may be conductively connected to another electronic device inside the vehicle 10 in the state of being installed in the vehicle 10.

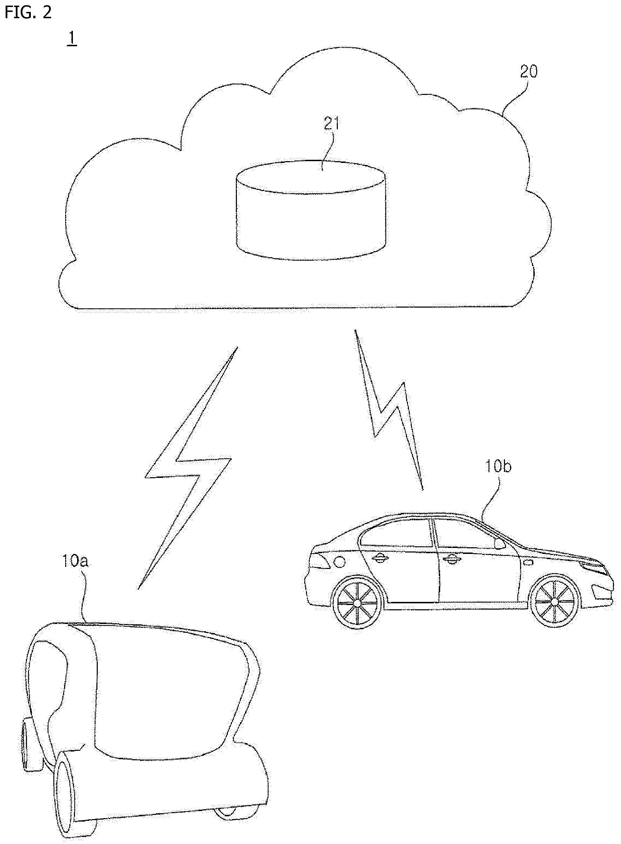

FIG. 2 is a diagram for explaining a system according to an embodiment of the present invention.

Referring to FIG. 2, a system 1 may include an infrastructure 20 and at least one vehicle 10a and 10b.

The infrastructure 20 may include at least one server 21. The server 21 may receive data generated by the vehicles 10a and 10b. The server 21 may process the received data. The server 21 may manipulate the received data.

The server 21 may receive data generated by at least one electronic device installed in the vehicles 10a and 10b. For example, the server 21 may receive data generated by at least one of an EHP, a user interface device, an object detection device, a communication device, a driving manipulation device, a main ECU, a vehicle-driving device, a travel system, a sensor, and a position-data-generating-device. The server 21 may generate big data based on the data received from a plurality of vehicles. For example, the server 21 may receive dynamic data from the vehicles 10a and 10b and may generate big data based on the received dynamic data. The server 21 may update HD map data based on the data received from a plurality of vehicles. For example, the server 21 may receive data generated by an object detection device from the EHP included in the vehicles 10a and 10b and may update HD map data.

The server 21 may provide pre-stored data to the vehicles 10a and 10b. For example, the server 21 may provide at least one of high-definition (HD) map data or standard definition (SD) map data to the vehicles 10a and 10b. The server 21 may classify the map data into map data for respective sections, and may provide only the map data corresponding to a section requested by the vehicles 10a and 10b. The HD map data may be referred to as high-precision map data.

The server 21 may provide data that is processed or manipulated by the server 21 to the vehicles 10a and 10b. The vehicles 10a and 10b may generate a travel control signal based on data received from the server 21. For example, the server 21 may provide the HD map data to the vehicles 10a and 10b. For example, the server 21 may provide dynamic data to the vehicles 10a and 10b.

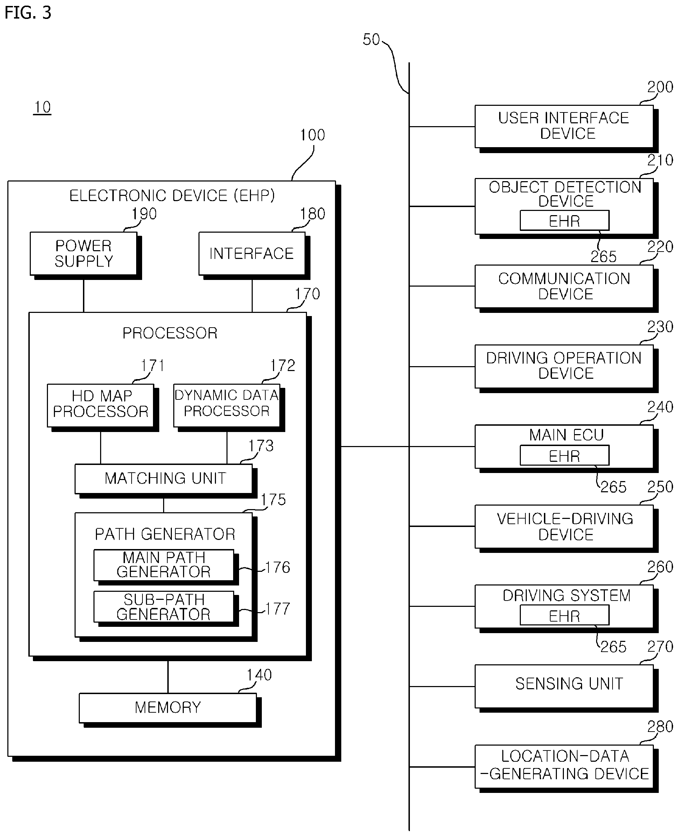

FIG. 3 is a diagram for explaining a vehicle including an electronic device according to an embodiment of the present invention.

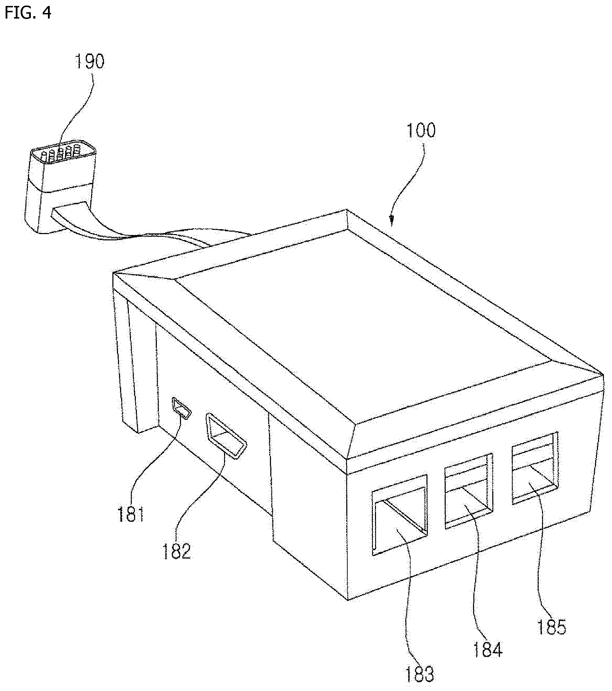

FIG. 4 is diagram showing an example of the outer appearance of an electronic device according to an embodiment of the present invention.

Referring to FIGs. 3 and 4, the vehicle 10 may include the electronic device 100, a user interface device 200, an object detection device 210, a communication device 220, a driving manipulation device 230, a main electronic control unit (ECU) 240, a vehicle-driving device 250, a travel system 260, a sensor 270, and a position-data-generating-device 280.

The electronic device 100 may be referred to as an electronic horizon provider (EHP). The electronic device 100 may generate electronic horizon data and may provide the same to at least one electronic device included in the vehicle 10.

The electronic horizon data may be described as driving plan data used to generate a travel control signal of the vehicle 10 in the travel system 260. For example, the electronic horizon data may be understood as driving plan data within a range to a horizon from the point where the vehicle 10 is positioned. Here, the horizon may be understood as a point a preset distance ahead of the point at which the vehicle 10 is positioned based on a preset travel path. The horizon may refer to a point that the vehicle 10 is capable of reaching after a predetermined time from the point at which the vehicle 10 is positioned along the preset traveling path. Here, the travel path may refer to a travel path to a final destination, and may be set by user input.

The electronic horizon data may include horizon map data and horizon path data.

The horizon map data may include at least one of topology data, ADAS data, HD map data, or dynamic data. In some embodiments, the horizon map data may include a plurality of layers. For example, the horizon map data may include a first layer matching the topology data, a second layer matching the ADAS data, a third layer matching the HD map data, and a fourth layer matching the dynamic data. The horizon map data may further include static object data.

The topology data may be described as a map made by connecting middle parts of roads. The topology data may be appropriate to broadly indicate the position of a vehicle and may be configured in the form of data that is mainly used in a navigation device for a driver. The topology data may be understood as data about road information other than information on lanes. The topology data may be generated based on data received from the infrastructure 20. The topology data may be based on data generated by the infrastructure 20. The topology data may be based on data stored in at least one memory included in the vehicle 10.

The ADAS data may refer to data related to information on a road. The ADAS data may include at least one of data on a slope of a road, data on a curvature of a road, or data on a speed limit of a road. The ADAS data may further include data on a no-passing zone. The ADAS data may be based on data generated by the infrastructure 20. The ADAS data may be based on data generated by the object detection device 210. The ADAS data may be referred to as road information data.

The HD map data may include topology information in units of detailed lanes of a road, information on connection between lanes, and information on characteristics for localization of a vehicle (e.g., a traffic sign, lane marking/attributes, or road furniture). The HD map data may be based on data generated by the infrastructure 20.

The dynamic data may include various pieces of dynamic information to be generated on a road. For example, the dynamic data may include information on construction, information on variable-speed lanes, information on the state of a road surface, information on traffic, and information on moving objects. The dynamic data may be based on data received from the infrastructure 20. The dynamic data may be based on data generated by the object detection device 210.

The electronic device 100 may provide map data within a range to a horizon from the point where the vehicle 10 is positioned.

The horizon path data may be described as the trajectory of the vehicle 10 within a range to a horizon from the point where the vehicle 10 is positioned. The horizon path data may include data indicating the relative probability of selection of any one among roads at a decision point (e.g., a forked road, a junction, or an intersection). The relative probability may be calculated based on the time taken to reach a final destination. For example, when a first road is selected at the decision point, if the time taken to reach a final destination is shorter than in the case in which a second road is selected, the probability of selecting the first road may be calculated to be higher than the probability of selecting the second road.

The horizon path data may include a main path and a sub path. The main path may be understood as a trajectory formed by connecting roads having a high probability of being selected. The sub path may branch from at least one decision point on the main path. The sub path may be understood as a trajectory formed by connecting roads having a low probability of being selected from at least one decision point on the main path.

The electronic device 100 may include an interface 180, a power supply 190, a memory 140, and a processor 170.

The interface 180 may exchange a signal with at least one electronic device included in the vehicle 10 in a wired or wireless manner. The interface 180 may exchange a signal with at least one of the user interface device 200, the object detection device 210, the communication device 220, the driving manipulation device 230, the main ECU 240, the vehicle-driving device 250, the travel system 260, the sensor 270, or the position-data-generating-device 280 in a wired or wireless manner. The interface 180 may include at least one of a communication module, a terminal, a pin, a cable, a port, a circuit, an element, or a device.

The power supply 190 may supply power to the electronic device 100. The power supply 190 may receive power from a power source (e.g., a battery) included in the vehicle 10 and may provide power to each unit of the electronic device 100. The power supply 190 may operate according to a control signal provided from the main ECU 240. The power supply 190 may be embodied as a switched-mode power supply (SMPS).

The memory 140 is conductively connected to the controller 170. The memory 140 may store default data for a unit, control data for controlling the operation of the unit, and input and output data. The memory 140 may be any of various storage devices in hardware, such as read only memory (ROM), random access memory (RAM), erasable and programmable ROM (EPROM), flash drive, and hard drive. The memory 140 may store various data for the overall operation of the vehicle 100, such as programs for processing or controlling in the controller 170.

The processor 170 may be conductively connected to the interface 180 and the power supply 190 and may exchange a signal therewith. The processor 170 may be embodied using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, or electric units for performing other functions.

The processor 170 may be driven by power provided from the power supply 190. The processor 170 may continuously generate electronic horizon data in the state in which the power supply 190 supplies power.

The processor 170 may generate electronic horizon data. The processor 170 may generate electronic horizon data. The processor 170 may generate horizon path data.

The processor 170 may generate electronic horizon data by applying a traveling situation of the vehicle 10. For example, the processor 170 may generate the electronic horizon data based on traveling direction data and traveling speed data of the vehicle 10.

The processor 170 may combine the generated electronic horizon data with the pre-generated electronic horizon data. For example, the processor 170 may connect horizon map data generated at a first time with horizon map data generated at a second time in terms of position. For example, the processor 170 may connect horizon path data generated at a first time with horizon path data generated at a second time in terms of position.

The processor 170 may provide electronic horizon data. The processor 170 may provide the electronic horizon data to at least one of the travel system 260 or the main ECU 240 through the interface 180.

The processor 170 may include the memory 140, an HD map processor 171, a dynamic data processor 172, a matcher 173, and a path generator 175.

The HD map processor 171 may receive HD map data from the server 21 through the communication device 220. The HD map processor 171 may store the HD map data. In some embodiments, the HD map processor 171 may process and manipulate the HD map data.

The dynamic data processor 172 may receive dynamic data from the object detection device 210. The dynamic data processor 172 may receive the dynamic data from the server 21. The dynamic data processor 172 may store the dynamic data. In some embodiments, the dynamic data processor 172 may process and manipulate the dynamic data.

The matcher 173 may receive an HD map from the HD map processor 171. The matcher 173 may receive the dynamic data from the dynamic data processor 172. The matcher 173 may generate horizon map data by matching the HD map data and the dynamic data.

In some embodiments, the matcher 173 may receive topology data. The matcher 173 may receive ADAS data. The matcher 173 may generate horizon map data by matching topology data, ADAS data, HD map data, and dynamic data.

The path generator 175 may generate horizon path data. The path generator 175 may include a main path generator 176 and a sub path generator 177. The main path generator 176 may generate main path data. The sub path generator 177 may generate sub path data.

The electronic device 100 may include at least one printed circuit board (PCB). The interface 180, the power supply 190, and the processor 170 may be conductively connected to the PCB.

In some embodiments, the electronic device 100 may be integrated into the communication device 220. In this case, the vehicle 10 may include the communication device 220 as a lower-ranking component of the electronic device 100.

The user interface device 200 may be a device for communication between the vehicle 10 and a user. The user interface device 200 may receive user input and may provide information generated by the vehicle 10 to a user. The vehicle 10 may embody a user interface (UI) or user experience (UX) through the user interface device 200.

The object detection device 210 may detect an object outside the vehicle 10. The object detection device 210 may include at least one of a camera, a RADAR, a LiDAR, an ultrasonic sensor, or an infrared sensor. The object detection device 210 may provide data on an object, generated based on a sensing signal generated by a sensor, to at least one electronic device included in a vehicle.

The object detection device 210 may generate dynamic data based on a sensing signal for sensing an object. The object detection device 210 may provide the dynamic data to the electronic device 100.

The object detection device 210 may receive electronic horizon data. The object detection device 210 may include an electronic horizon re-constructor (EHR) 265. The EHR 265 may convert the electronic horizon data into the data format to be used in the object detection device 210.

The communication device 220 may exchange a signal with a device positioned outside the vehicle 10. The communication device 220 may exchange a signal with at least one of an infrastructure (e.g., a server) or other vehicles. The communication device 220 may include at least one of a transmission antenna and a reception antenna for communication, and a radio frequency (RF) circuit or an RF device for embodying various communication protocols.

The driving manipulation device 230 may be a device for receiving user input for driving. In the case of a manual mode, the vehicle 10 may be driven based on a signal provided by the driving manipulation device 230. The driving manipulation device 230 may include a steering input device (e.g., a steering wheel), an acceleration input device (e.g., an accelerator pedal), and a brake input device (e.g., a brake pedal).

The main ECU 240 may control the overall operation of at least one electronic device included in the vehicle 10.

The main ECU 240 may receive electronic horizon data. The main ECU 240 may include an electronic horizon re-constructor (EHR) 265. The EHR 265 may convert the electronic horizon data into a data format to be used in the main ECU 240.

The vehicle-driving device 250 may be a device for electrical control of various devices in the vehicle 10. The vehicle-driving device 250 may include a powertrain driver, a chassis driver, a door/window driver, a safety device driver, a lamp driver, and a conditioning driver. The powertrain driver may include a power source driver and a transmission driver. The chassis driver may include a steering driver, a brake driver, and a suspension driver.

The travel system 260 may perform a traveling operation of the vehicle 10. The travel system 260 may provide a control signal to at least one of a powertrain driver or a chassis driver of the vehicle-driving device 250, and may move the vehicle 10.

The travel system 260 may receive electronic horizon data. The travel system 260 may include an electronic horizon re-constructor (EHR) 265. The EHR 265 may convert the electronic horizon data into a data format to be used in an ADAS application and an autonomous driving application.

The travel system 260 may include at least one of an ADAS application or an autonomous driving application. The travel system 260 may generate a travel control signal using at least one of the ADAS application and the autonomous driving application.

The sensor 270 may sense the state of a vehicle. The sensor 270 may include at least one of an inertial navigation unit (IMU) sensor, a collision sensor, a wheel sensor, a speed sensor, an inclination sensor, a weight detection sensor, a heading sensor, a position module, a vehicle forward/backward sensor, a battery sensor, a fuel sensor, a tire sensor, a steering sensor using rotation of a steering wheel, a vehicle interior temperature sensor, a vehicle interior humidity sensor, an ultrasonic sensor, an illumination sensor, an accelerator pedal position sensor, or a brake pedal position sensor. The inertial navigation unit (IMU) sensor may include one or more of an acceleration sensor, a gyro sensor, and a magnetic sensor.

The sensor 270 may generate data on the state of the vehicle based on a signal generated by at least one sensor. The sensor 270 may acquire a sensing signal for sensing vehicle posture information, vehicle motion information, vehicle yaw information, vehicle roll information, vehicle pitch information, vehicle collision information, vehicle direction information, vehicle angle information, vehicle speed information, vehicle acceleration information, vehicle inclination information, vehicle forward/backward information, battery information, fuel information, tire information, vehicle lamp information, vehicle interior temperature information, vehicle interior humidity information, steering wheel rotation angle, vehicle external illumination, the pressure applied to an accelerator pedal, the pressure applied to a brake pedal, and the like.

In addition, the sensor 270 may further include an accelerator pedal sensor, a pressure sensor, an engine rotation speed sensor, an air flow sensor (AFS), an air temperature sensor (ATS), a water temperature sensor (WTS), a throttle position sensor (TPS), a TDC sensor, and a crank angle sensor (CAS).

The sensor 270 may generate vehicle state information based on sensing data. The vehicle state information may be information generated based on data detected by various sensors included in a vehicle.

For example, the vehicle state information may include vehicle posture information, vehicle speed information, vehicle inclination information, vehicle weight information, vehicle direction information, vehicle battery information, vehicle fuel information, vehicle tire air-pressure information, vehicle steering information, vehicle interior temperature information, vehicle interior humidity information, pedal position information, and vehicle engine temperature information.

The position-data-generating-device 280 may generate position data of the vehicle 10. The position-data-generating-device 280 may include at least one of a global positioning system (GPS) or a differential global positioning system (DGPS). The position-data-generating-device 280 may generate position data of the vehicle 10 based on a signal generated by at least one of the GPS or the DGPS. In some embodiments, the position-data-generating-device 280 may correct the position data based on at least one of an inertial measurement unit (IMU) of the sensor 270 or a camera of the object detection device 210.

The vehicle 10 may include an internal communication system 50. A plurality of electronic devices included in the vehicle 10 may exchange a signal using the internal communication system 50 as a medium. The signal may include data. The internal communication system 50 may use at least one communication protocol (e.g., CAN, LIN, FlexRay, MOST, or Ethernet).

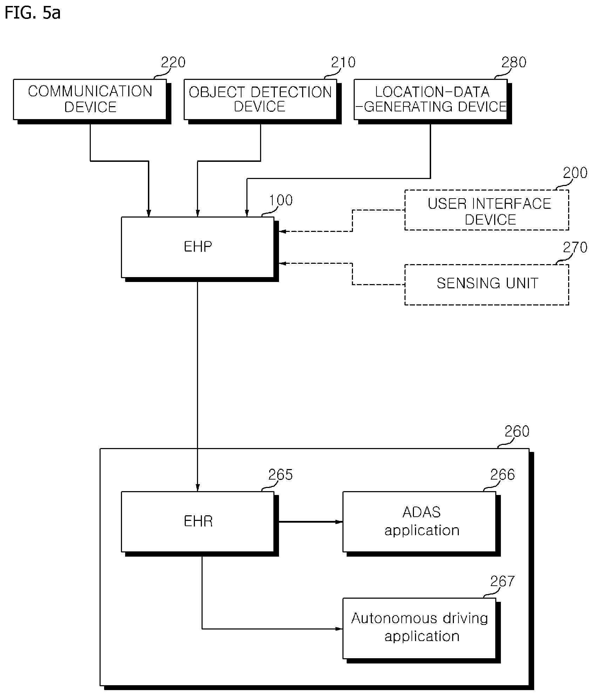

FIG. 5A is a flowchart of a signal inside a vehicle including an electronic device according to an embodiment of the present invention.

Referring to FIG. 5A, the electronic device 100 may receive HD map data from the server 21 through the communication device 220.

The electronic device 100 may receive dynamic data from the object detection device 210. In some embodiments, the electronic device 100 may also receive dynamic data from the server 21 through the communication device 220.

The electronic device 100 may receive position data of a vehicle from the position-data-generating-device 280.

In some embodiments, the electronic device 100 may receive a signal based on user input through the user interface device 200. In some embodiments, the electronic device 100 may receive vehicle state information from the sensor 270.

The electronic device 100 may generate electronic horizon data based on HD map data, dynamic data, and position data. The electronic device 100 may match the HD map data, the dynamic data, and the position data with each other to generate horizon map data. The electronic device 100 may generate horizon path data on a horizon map. The electronic device 100 may generate main path data and sub path data on the horizon map.

The electronic device 100 may provide electronic horizon data to the travel system 260. The EHR 265 of the travel system 260 may convert the electronic horizon data into a data format appropriate for applications 266 and 267. The applications 266 and 267 may generate a travel control signal based on the electronic horizon data. The travel system 260 may provide the travel control signal to the vehicle-driving device 250.

The travel system 260 may include at least one of an ADAS application 266 or an autonomous driving application 267. The ADAS application 266 may generate a control signal for assisting the driver in driving of the vehicle 10 through the driving manipulation device 230 based on the electronic horizon data. The autonomous driving application 267 may generate a control signal for moving the vehicle 10 based on the electronic horizon data.

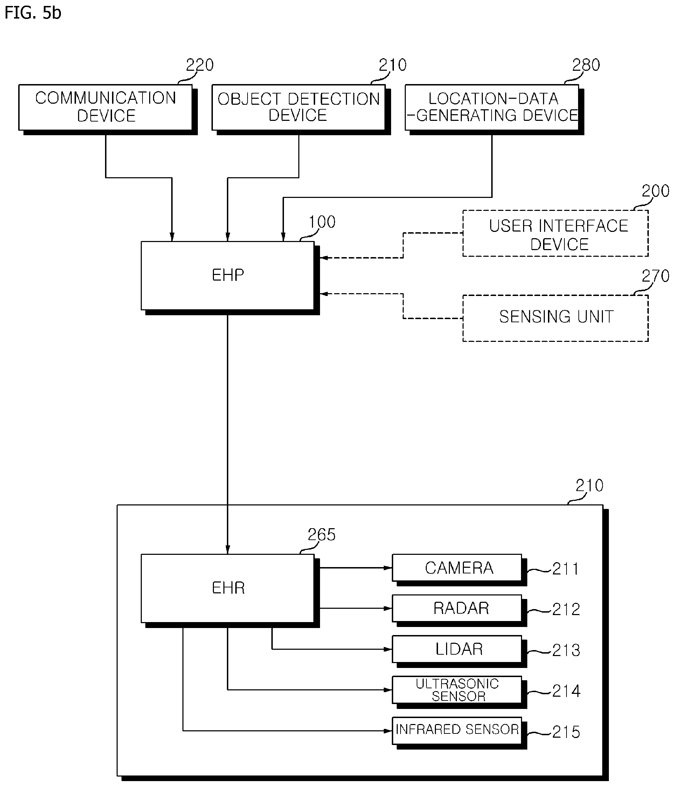

FIG. 5B is a flowchart of a signal inside a vehicle including an electronic device according to an embodiment of the present invention.

With reference to FIG. 5B, the embodiment of the present invention will be described in terms of differences from FIG. 5A. The electronic device 100 may provide the electronic horizon data to the object detection device 210. The EHR 265 of the object detection device 210 may convert the electronic horizon data into a data format appropriate for the object detection device 210. The object detection device 210 may include at least one of a camera 211, a RADAR 212, a LiDAR 213, an ultrasonic sensor 214, or an infrared sensor 215. The electronic horizon data, the data format of which is converted by the EHR 265, may be provided to at least one of the camera 211, the RADAR 212, the LiDAR 213, the ultrasonic sensor 214, or the infrared sensor 215. At least one of the camera 211, the RADAR 212, the LiDAR 213, the ultrasonic sensor 214, or the infrared sensor 215 may generate data based on the electronic horizon data.

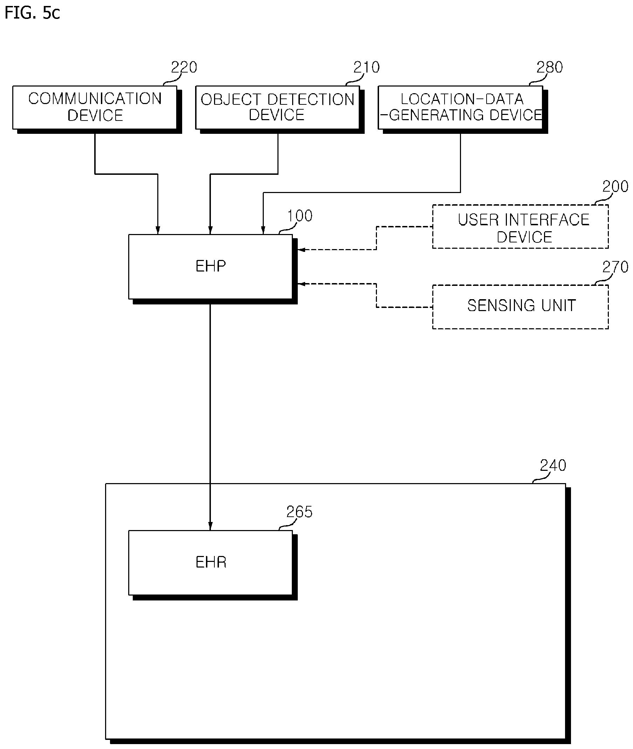

FIG. 5C is a flowchart of a signal inside a vehicle including an electronic device according to an embodiment of the present invention.

With reference to FIG. 5C, the embodiment of the present invention will be described in terms of differences from FIG. 5A. The electronic device 100 may provide electronic horizon data to the main ECU 240. The EHR 265 of the main ECU 240 may convert the electronic horizon data into a data format appropriate for the main ECU 240. The main ECU 240 may generate a control signal based on the electronic horizon data. For example, the main ECU 240 may generate a control signal for controlling at least one of the user interface device 180, the object detection device 210, the communication device 220, the driving manipulation device 230, the vehicle-driving device 250, the travel system 260, the sensor 270, or the position-data-generating-device 280 based on the electronic horizon data.

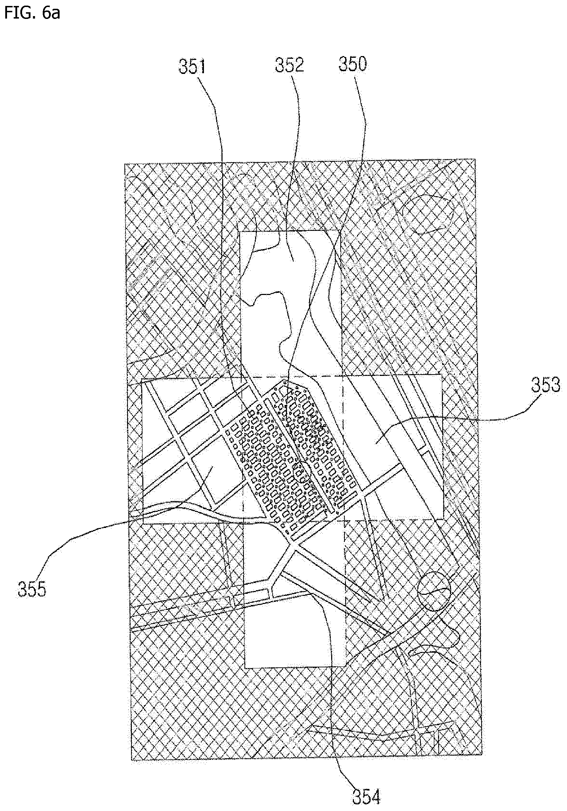

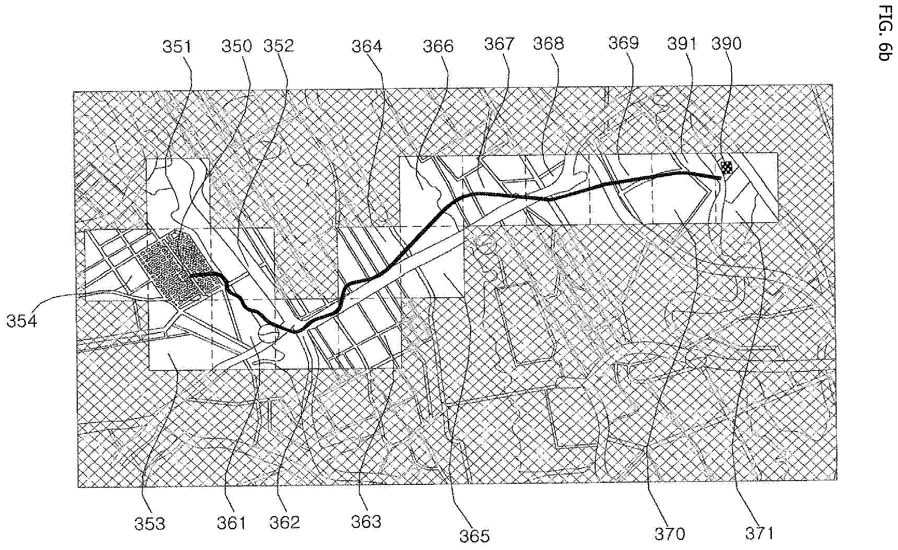

FIGs. 6A and 6B are diagrams for explaining an operation of receiving HD map data according to an embodiment of the present invention.

The server 21 may divide the HD map data in units of HD map tiles and may provide the divided HD map data to the electronic device 100. The processor 170 may download the HD map data in units of HD map tiles from the server 21 through the communication device 220.

An HD map tile may be defined as sub HD map data obtained by geographically dividing an entire HD map into rectangular shapes. All HD map data may be acquired by connecting all HD map tiles. The HD map data is high-scale data, and thus the vehicle 10 requires a high-performance controller to download all of the HD map data and to use the downloaded HD map data by the vehicle 10. As communication technologies have been developed, the vehicle 10 may download and use the HD map data in the form of HD map tiles and may thus obviate a high-performance controller rather than requiring inclusion of the high-performance controller, and thus may effectively process data.

The processor 170 may store the downloaded HD map tile in the memory 140. The processor 170 may delete the stored HD map tile. For example, the processor 170 may delete the HD map tile when the vehicle 10 moves out of a section corresponding to the HD map tile. For example, the processor 170 may delete the HD map tile when a preset time elapses since the HD map tile was stored.

FIG. 6A is a diagram for explaining an operation of receiving HD map data when there is no preset destination.

Referring to FIG. 6A, when there is no preset destination, the processor 170 may receive a first HD map tile 351 including a position 350 of the vehicle 10. The server 21 may receive data on the position 350 of the vehicle 10 from the vehicle 10 and may provide the first HD map tile 351 including a position 250 of the vehicle 10 to the vehicle 10. The processor 170 may receive HD map tiles 352, 353, 354, and 355 around the first HD map tile 351. For example, the processor 170 may receive the HD map tiles 352, 353, 354, and 355 that neighbor upper, lower, left, and right sides of the first HD map tile 351, respectively. In this case, the processor 170 may receive five HD map tiles in total. For example, the processor 170 may further receive an HD map tile positioned in a diagonal direction from the first HD map tile 351 along with the HD map tiles 352, 353, 354, and 355 that neighbor upper, lower, left, and right sides of the first HD map tile 351, respectively. In this case, the processor 170 may receive nine HD map tiles in total.

FIG. 6B is a diagram for explaining an operation of receiving HD map data when there is a preset destination.

Referring to FIG. 6B, when there is a preset destination, the processor 170 may receive tiles 350, 352, 361, 362, 363, 364, 365, 366, 367, 368, 369, 370, and 371 associated with a path 391 to the position 350 of the vehicle 10. The processor 170 may receive the plurality of tiles 350, 352, 361, 362, 363, 364, 365, 366, 367, 368, 369, 370, and 371 to cover the path 391.

The processor 170 may receive all of the tiles 350, 352, 361, 362, 363, 364, 365, 366, 367, 368, 369, 370, and 371, which cover the path 391, at one time.

While the vehicle 10 moves along the path 391, the processor 170 may separately receive all of the tiles 350, 352, 361, 362, 363, 364, 365, 366, 367, 368, 369, 370, and 371. While the vehicle 10 moves along the path 391, the processor 170 may receive only at least some of the tiles 350, 352, 361, 362, 363, 364, 365, 366, 367, 368, 369, 370, and 371 based on the position of the vehicle 10. Then, the processor 170 may continuously receive tiles and may delete the pre-received tiles while the vehicle 10 moves.

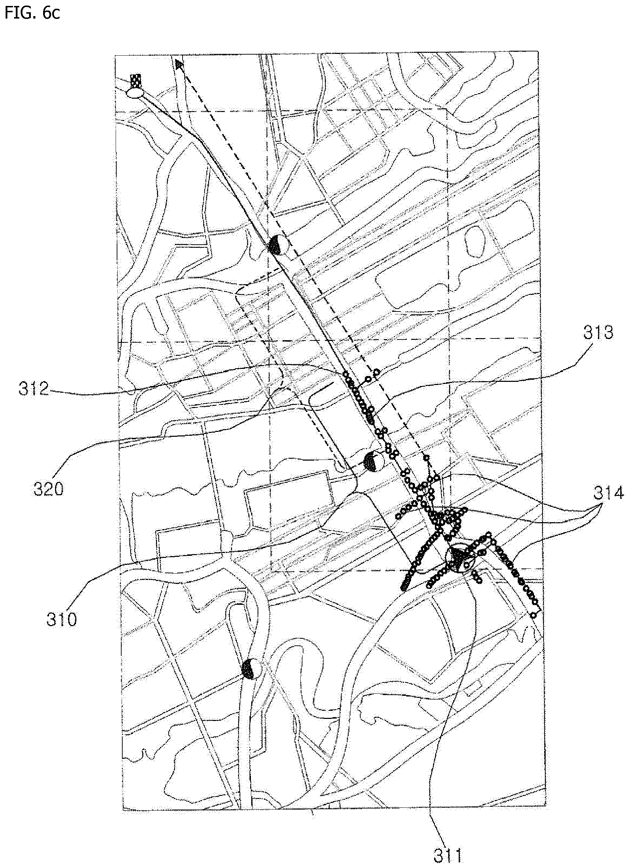

FIG. 6C is a diagram for explaining an operation of generating electronic horizon data according to an embodiment of the present invention.

Referring to FIG. 6C, the processor 170 may generate the electronic horizon data based on HD map data.

The vehicle 10 may travel in the state in which a final destination is set. The final destination may be set based on user input received through the user interface device 200 or the communication device 220. In some embodiments, the final destination may also be set by the travel system 260.

In the state in which the final destination is set, the vehicle 10 may be positioned within a preset distance from a first point while traveling. When the vehicle 10 is positioned within a preset distance from the first point, the processor 170 may generate electronic horizon data using a first point as a start point and a second point as an end point. Each of the first point and the second point may be one point on a path toward the final destination. The first point may be described as the point at which the vehicle 10 is currently positioned or is to be positioned in the near future. The second point may be described as the aforementioned horizon.

The processor 170 may receive an HD map of a region including a section to the second point from the first point. For example, the processor 170 may make a request for an HD map of a region within a predetermined radius from a section to the second point from the first point and may receive the HD map.

The processor 170 may generate electronic horizon data on a region including the section to the second point from the first point based on the HD map. The processor 170 may generate horizon map data of the region including the section to the second point from the first point. The processor 170 may generate horizon path data of the region including the section to the second point from the first point. The processor 170 may generate data on a main path 313 of the region including the section to the second point from the first point. The processor 170 may generate data on a sub path 314 of the region including the section to the second point from the first point.

When the vehicle 10 is positioned within a preset distance from the second point, the processor 170 may generate electronic horizon data using a second point as a start point and a third point as an end point. Each of the second point and the third point may be one point on a path toward a final destination. The second point may be described as a point at which the vehicle 10 is currently positioned or is to be positioned in the near future. The third point may be described as the aforementioned horizon. The electronic horizon data using the second point as a start point and the third point as an end point may be geographically connected to the aforementioned electronic horizon data using the first point as a start point and the second point as an end point.

The aforementioned operation of generating the electronic horizon data using the first point as a start point and the second point as an end point may be applied in the same way to the operation of generating the electronic horizon data using the second point as a start point and the third point as an end point.

In some embodiments, the vehicle 10 may also travel in the state in which a final destination is not set.

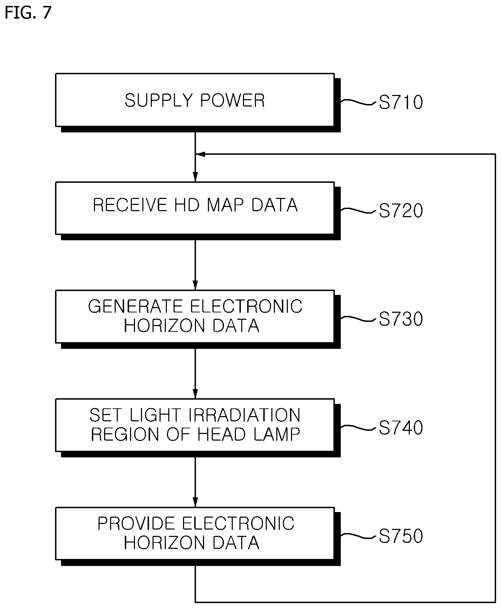

FIG. 7 is a flowchart of an electronic device according to an embodiment of the present invention.

Referring to FIG. 7, the processor 170 may receive power through the power supply 190 (S710). The power supply 190 may supply power to the processor 170. When the vehicle 10 is turned on, the processor 170 may receive power received from a battery included in the vehicle 10 through the power supply 190. When receiving power, the processor 170 may perform a processing operation.

The processor 170 may receive HD map data through the interface 180 (S720). In the state in which the vehicle 10 travels, the interface 180 may receive HD map data of a specified geographic region from the server 21 through the communication device 220. The interface 180 may receive HD map data around the position of the vehicle 10. The interface 180 may receive HD map data of a first section in the state in which the vehicle 10 is supposed to enter the first section. The interface 180 may transmit the received HD map data to the processor 170.

The processor 170 may continuously generate electronic horizon data of a specified region based on the HD map data in the state in which power is supplied (S730). The processor 170 may generate electronic horizon data to a horizon from the position of the vehicle 10. The electronic horizon data may include horizon map data and horizon path data. The horizon path data may include a main path and a sub path. The electronic horizon data may include static object data including information on at least one of a traffic sign indicating information, a speed camera, or a bump. The electronic horizon data may include dynamic data including information on at least one of a pot hole, a slippery road, an off road, or black ice. The electronic horizon data may include dynamic data including information on a hidden object defined as an object that is not sensed by a sensor.

The processor 170 may set a light irradiation region of a head lamp based on electronic horizon data (S740).

The setting operation S740 may include an operation of setting at least some of the main path and the sub path of the horizon path data in at least one of an intersection and a junction specified in the horizon map data to the light irradiation region of the head lamp by at least one processor 170. The processor 170 may set at least some of the main path and the sub path in at least one of the intersection and the junction specified in the horizon map data to the light irradiation region of the head lamp.

The setting operation S740 may include an operation of setting at least one of a traffic sign, a speed camera, or a bump to a light irradiation region of a head lamp by at least one processor 170. The processor 170 may set at least one of the traffic sign, the speed camera, or the bump to the light irradiation region of the head lamp.

The setting operation S740 may include an operation of setting at least one of a pot hole, a slippery road, an off road, or black ice to the light irradiation region of the head lamp by at least one processor 170. The processor 170 may set at least one of the pot hole, the slippery road, the off road, or the black ice to the light irradiation region of the head lamp.

The setting operation S740 may include an operation of setting a point at which a hidden object is positioned to the light irradiation region of the head lamp by at least one processor 170. The processor 170 may set the point at which the hidden object is positioned to the light irradiation region of the head lamp.

The processor 170 may provide electronic horizon data through the interface 180 (S750). The processor 170 may provide data of the light irradiation region of the head lamp with electronic horizon data through the interface 180. The travel system 260 may receive the electronic horizon data and may drive the vehicle 10 based on the electronic horizon data. The lamp driver of the vehicle-driving device 250 may receive data of the light irradiation region of the head lamp. The lamp driver may provide a control signal to the head lamp to irradiate light to the light irradiation region set by the electronic device 100.

After operation S750, the method may return to operation S720 and subsequent operations may be performed.

Operations S720 to S750 may be performed in the state in which power is supplied from the power supply 190.

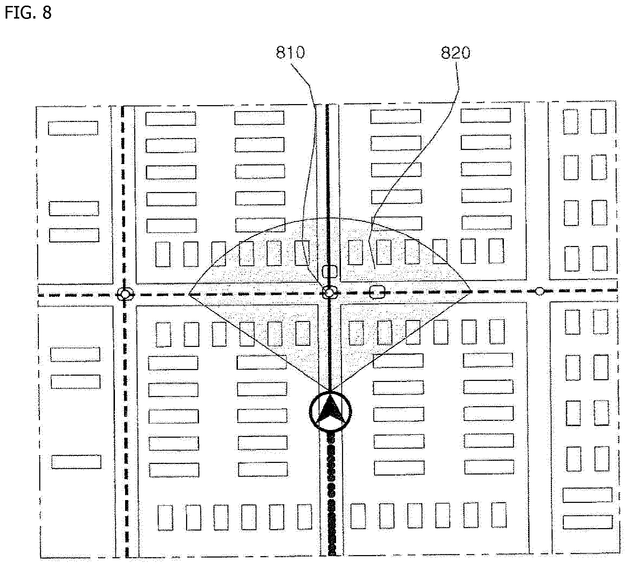

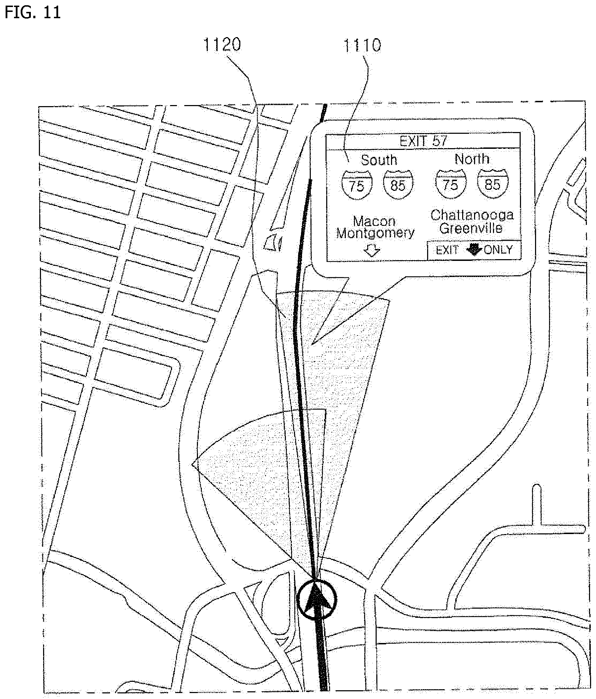

FIGs. 8 to 14 are diagrams for explaining an operation of an electronic device according to an embodiment of the present invention.

Referring to FIG. 8, the processor 170 may specify an intersection 810 at which the vehicle 10 is supposed to be positioned, based on electronic horizon data. The processor 170 may set the horizon path including the specified intersection 810 to a light irradiation region of a head lamp. The processor 170 may specify the main path and the sub path using the intersection 810 as a start point. The processor 170 may set at least some of the main path including the intersection 810 to the light irradiation region of the head lamp. The processor 170 may set at least some of the sub path including the intersection 810 to the light irradiation region of the head lamp. The processor 170 may provide data of the light irradiation region of the head lamp with respect to a horizon path including the intersection 810, to the lamp driver. The data of the light irradiation region may include data of at least one of a light irradiation angle, light reduction, light expansion, a light irradiation direction, or a light irradiation distance.

The lamp driver may receive the data of the light irradiation region of the head lamp with respect to the horizon path including the intersection 810, from the electronic device 100. The lamp driver may provide a control signal to the head lam based on the received data of the light irradiation region.

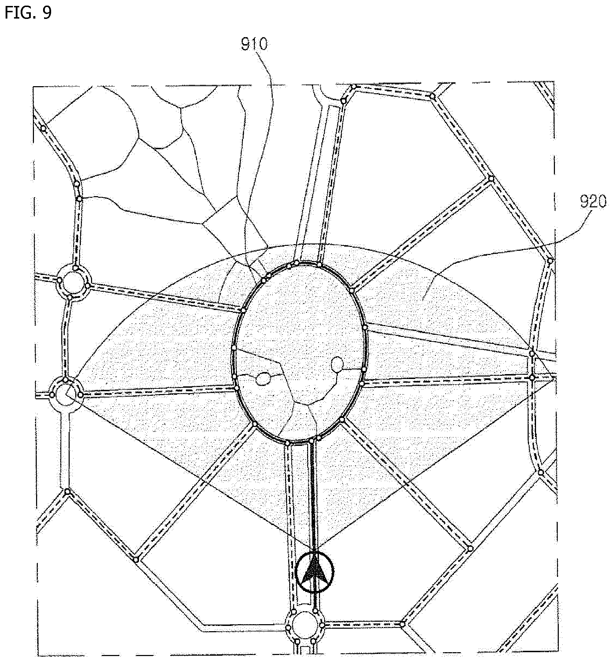

Referring to FIG. 9, the processor 170 may specify a junction 910 at which the vehicle 10 is supposed to be positioned, based on electronic horizon data. The junction 910 may have an upper-ranking concept including at least one of the intersection 810, a ramp, or a rotary. The processor 170 may set the horizon path including the specified junction 910 to the light irradiation region of the head lamp. The processor 170 may specify the main path and the sub path using the junction 910 as a start point. The processor 170 may set at least some of the main path including the junction 910 to the light irradiation region of the head lamp. The processor 170 may set at least some of the sub path including the junction 910 to the light irradiation region of the head lamp. The processor 170 may provide data of the light irradiation region of the head lamp with respect to the horizon path including the junction 910 to the lamp driver. The data of the light irradiation region may include data of at least one of a light irradiation angle, light reduction, light expansion, a light irradiation direction, or a light irradiation distance.

The lamp driver may receive data of the light irradiation region of the head lamp with respect to the horizon path including the junction 910, from the electronic device 100. The lamp driver may provide a control signal to the head lamp based on the received data of the light irradiation region.

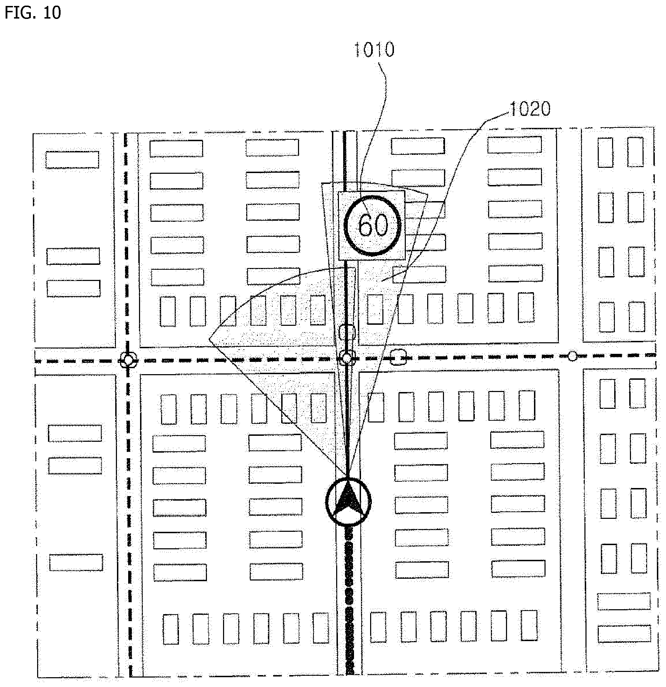

Referring to FIGs. 10 to 11, the processor 170 may static object data based on electronic horizon data. The processor 170 may acquire the static object from HD map data. The static object may be defined as an object that does not move while being fixed to the ground. The static object may include at least one of traffic signs 1010 and 1110, a speed camera, or a bump. The processor 170 may determine whether the static object is positioned on the main path. When determining that the static object is positioned on the main path, the processor 170 may set the static object to the light irradiation region of the head lamp. The processor 170 may provide data of the light irradiation region of the head lamp with respect to the static object to the lamp driver. The data of the light irradiation region may include data of at least one of a light irradiation angle, light reduction, light expansion, a light irradiation direction, or a light irradiation distance.

The lamp driver may receive the data of the light irradiation region of the head lamp with respect to the static object from the electronic device 100. The lamp driver may provide a control signal to the head lamp based on the received data of the light irradiation region.

Data of the static object may be included in the HD map data.

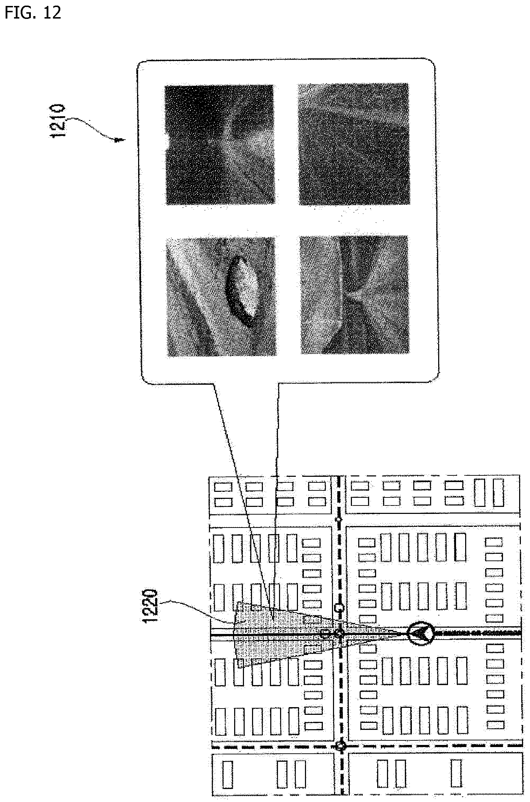

Referring to FIG. 12, the processor 170 may acquire data of a dynamic object based on the electronic horizon data. The processor 170 may acquire the data of the dynamic object from the HD map data. The dynamic object may include at least one of a pot hole, a slippery road, an off road, or black ice. The dynamic object may be defined as a dynamic object that is generated or is removed depending on a situation. The processor 170 may determine whether the dynamic object is positioned on a main path. When determining that the dynamic object is positioned on the main path, the processor 170 may set the dynamic object to the light irradiation region of the head lamp. The processor 170 may provide data of the light irradiation region of the head lamp with respect to the dynamic object. The data of the light irradiation region may include data of at least one of a light irradiation angle, light reduction, light expansion, a light irradiation direction, or a light irradiation distance.

The lamp driver may receive the data of the light irradiation region of the head lamp with respect to the dynamic object from the electronic device 100. The lamp driver may provide a control signal for the head lamp based on the received data of the light irradiation region.

The data of the dynamic object may be included in the HD map data. The data of the dynamic object may be based on a data generated by the object detection device 210.

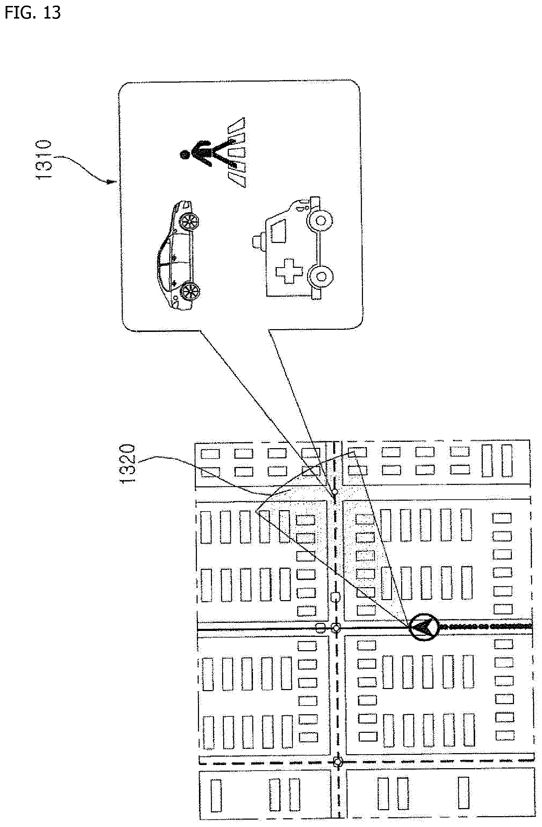

Referring to FIG. 13, the processor 170 may acquire data of a hidden object based on the electronic horizon data. The processor 170 may acquire the data of the hidden object from the HD map data. The HD map data may be generated based on data generated by a plurality of vehicles, and thus may include the data of the hidden object in terms of the vehicle 10. The hidden object may be defined as an object that is blocked by another object or is not detected by a sensor included in the vehicle 10 due to a shape of a road. The hidden object may include at least one of another vehicle, a pedestrian, or a two-wheeled vehicle. The processor 170 may determine whether the hidden object is positioned on the sub path. When determining that the hidden object is positioned on the sub path, the processor 170 may set a point at which the hidden object is positioned to the light irradiation region of the head lamp. The processor 170 may provide the data of the light irradiation region of the hidden object to the lamp driver. The data of the light irradiation region may include data of at least one of a light irradiation angle, light reduction, light expansion, a light irradiation direction, or a light irradiation distance.

The lamp driver may receive the data of the light irradiation region of the head lamp with respect to the hidden object from the electronic device 100. The lamp driver may provide a control signal for the head lamp based on the received data of the light irradiation region.

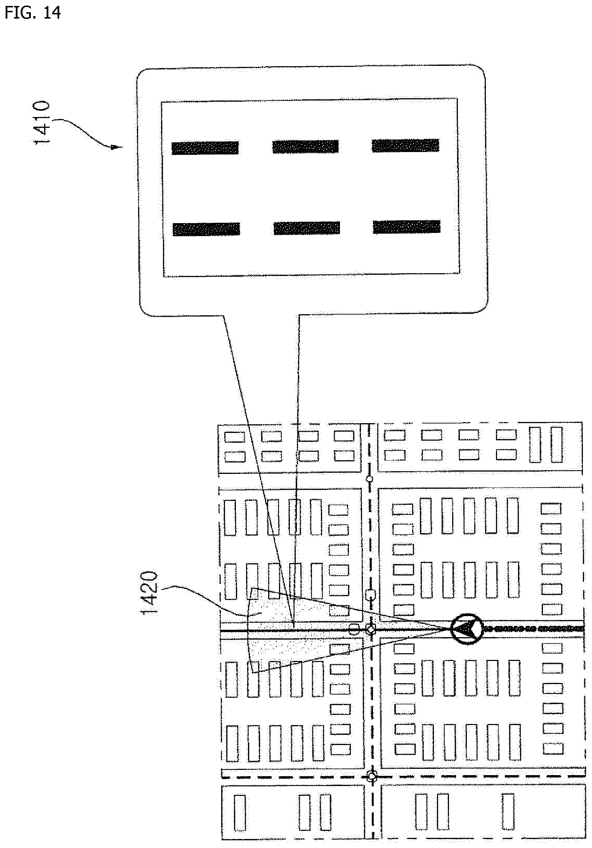

Referring to FIG. 14, the processor 170 may determine whether a lane is present on the main path based on data of an image acquired from a camera of the object detection device 210. When determining that a lane is not present on at least a portion of the main path, the processor 170 may generate an imaginary lane. The processor 170 may provide data of the generated imaginary lane to the lamp driver.

The lamp driver may form a lane pattern on a road surface using light output from the head lamp based on the data of the imaginary lane. The lamp driver may form the lane pattern on the road surface using at least one of a color difference, a contrast difference, or a brightness difference of light.

The aforementioned present disclosure can also be embodied as computer readable code stored on a computer readable recording medium. The computer readable recording medium is any data storage device that can store data which can thereafter be read by a computer. Examples of the computer readable recording medium include a hard disk drive (HDD), a solid state drive (SSD), a silicon disk drive (SDD), read-only memory (ROM), random-access memory (RAM), CD-ROM, magnetic tapes, floppy disks, optical data storage devices, carrier waves (e.g., transmission via the Internet), etc. The computer may include a processor or a controller. Accordingly, it is intended that the present disclosure cover the modifications and variations of this invention provided they come within the scope of the appended claims and their equivalents.

### [Description of reference numeral]

1: System
10: Vehicle
100: Electronic device
170: Processor

## Claims

1. An electronic device (100) for a vehicle (10), comprising:
a power supply (190) configured to supply power;
an interface (180) configured to receive high definition, HD, map data (351-355; 361-371) of a specified region from a server (21) through a communication device (220); and
at least one processor (170) configured to continuously generate electronic horizon data of the specified region based on the HD map data (351-355; 361-371) in a state in which the power is received, and to set a light irradiation region of a head lamp based on the electronic horizon data,
**characterised in that**
the electronic horizon data comprises dynamic data comprising information on a hidden object (1310) defined as an object that is not sensed by a sensor (211-215), and
wherein the processor (170) is configured to set a point at which the hidden object is located to the light irradiation region (1320).

2. The electronic device of claim 1, wherein the electronic horizon data comprises horizon map data and horizon path data; and
wherein the processor (170) is configured to set at least some of a main path and a sub path of the horizon path data in at least one of an intersection (810) or a junction specified in the horizon map data to the light irradiation region (820).

3. The electronic device of claim 1, wherein the electronic horizon data comprises static object data comprising information on at least one of a traffic sign (1010, 1110) indicating information, a speed camera, or a bump; and
wherein the processor (170) is configured to set at least one of the traffic sign, the speed camera, or the bump to the light irradiation region (1020, 1120).

4. The electronic device of claim 1, wherein the electronic horizon data comprises dynamic data comprising information (1210) on at least one of a pot hole, a slippery road, an off road, or black ice; and
wherein the processor (170) is configured to set at least one of the pot hole, the slippery road, the off road, or the black ice to the light irradiation region (1220).

5. A method of operating an electronic device for a vehicle, the method comprising:
receiving (S710) power by at least one processor;
receiving (S720) high definition, HD, map data of a specified region from a server through a communication in a state in which the power is received, by the at least one processor;
generating (S730) electronic horizon data of the specified region based on the HD map data in the state in which the power is received, by the at least one processor; and
setting (S740) a light irradiation region of a head lamp based on the electronic horizon data, by the at least one processor,
wherein the electronic horizon data comprises dynamic data comprising information on a hidden object (1310) defined as an object that is not sensed by a sensor (211-215), and
wherein the setting comprises setting a point at which the hidden object is located to the light irradiation region (1320), by the at least one processor.

6. The method of claim 5, wherein the electronic horizon data comprises horizon map data and horizon path data; and
wherein the setting comprises setting at least some of a main path and a sub path of the horizon path data in at least one of an intersection (810) and a junction specified in the horizon map data to the light irradiation region (820).

7. The method of claim 5, wherein the electronic horizon data comprises information on at least one of a traffic sign (1010, 1110) indicating information, a speed camera, or a bump; and
wherein the setting comprises setting at least one of the traffic sign (1010, 1110), the speed camera, or the bump to the light irradiation region (1020, 1120), by the at least one processor.

8. The method of claim 5, wherein the electronic horizon data comprises dynamic data comprising information (1210) on at least one of a pot hole, a slippery road, an off road, or black ice; and
wherein the setting comprises setting at least one of the pot hole, the slippery road, the off road, or the black ice to a light irradiation region (1220), by the at least one processor.

## Patentansprüche

1. Elektronische Vorrichtung (100) für ein Fahrzeug (10), umfassend:
eine Stromversorgung (190), die dazu eingerichtet ist, Strom zu liefern;
eine Schnittstelle (180), die dazu eingerichtet ist, hochauflösende Kartendaten, HD-Kartendaten, (351-355; 361-371) einer bestimmten Region von einem Server (21) über eine Kommunikationsvorrichtung (220) zu empfangen; und
mindestens einen Prozessor (170), der dazu eingerichtet ist, kontinuierlich elektronische Horizontdaten der bestimmten Region auf der Grundlage der HD-Kartendaten (351-355; 361-371) in einem Zustand zu erzeugen, in dem Strom geliefert wird, und einen Lichtbestrahlungsbereich eines Scheinwerfers auf der Grundlage der elektronischen Horizontdaten festzulegen,
**dadurch gekennzeichnet, dass** die elektronischen Horizontdaten dynamische Daten umfassen, die Informationen über ein verborgenes Objekt (1310) enthalten, das als ein Objekt definiert ist, das nicht von einem Sensor (211-215) erfasst wird, und
wobei der Prozessor (170) dazu eingerichtet ist, einen Punkt, an dem sich das verborgene Objekt befindet, in dem Lichtbestrahlungsbereich (1320) festzulegen.

2. Elektronische Vorrichtung nach Anspruch 1, wobei die elektronischen Horizontdaten Horizontkartendaten und Horizontpfaddaten umfassen; und
wobei der Prozessor (170) dazu eingerichtet ist, mindestens manche von einem Hauptpfad und einem Nebenpfad der Horizontpfaddaten in mindestens einem von einem in den Horizontkartendaten angegebenen Schnittpunkt (810) oder einer Kreuzung in dem Lichtbestrahlungsbereich (820) festzulegen.

3. Elektronische Vorrichtung nach Anspruch 1, wobei die elektronischen Horizontdaten statische Objektdaten umfassen, die Informationen über mindestens eines der folgenden Elemente enthalten: ein Verkehrsschild (1010, 1110), das Informationen anzeigt, eine Geschwindigkeitskamera oder eine Bodenwelle; und
wobei der Prozessor (170) dazu eingerichtet ist, mindestens eines der Verkehrszeichen, der Geschwindigkeitskamera oder der Bodenwelle in dem Lichteinstrahlungsbereich (1020, 1120) festzulegen .

4. Elektronische Vorrichtung nach Anspruch 1, wobei die elektronischen Horizontdaten dynamische Daten umfassen, die Informationen (1210) zu mindestens einem Schlagloch, einer rutschigen Straße, einem Straßenrand oder Glatteis enthalten; und
wobei der Prozessor (170) dazu eingerichtet ist, mindestens eines der Elemente Schlagloch, rutschige Straße, Gelände oder Glatteis in dem Lichtbestrahlungsbereich (1220) festzulegen.

5. Verfahren zum Betreiben einer elektronischen Vorrichtung für ein Fahrzeug, wobei das Verfahren umfasst:
Empfang (S710) von Energie durch mindestens einen Prozessor;
Empfangen (S720), durch den mindestens einen Prozessor, von hochauflösenden Kartendaten, HD-Kartendaten, einer bestimmten Region von einem Server über eine Kommunikation in einem Zustand, in dem die Energie empfangen wird;
Erzeugen (S730), durch den mindestens einen Prozessor, elektronischer Horizontdaten der bestimmten Region auf der Grundlage der HD-Kartendaten in dem Zustand, in dem die Energie empfangen wird; und
Festlegen (S740), durch den mindestens einen Prozessor, eines Lichtbestrahlungsbereichs eines Scheinwerfers auf der Grundlage der Daten des elektronischen Horizonts,
wobei die elektronischen Horizontdaten dynamische Daten umfassen, die Informationen über ein verborgenes Objekt (1310) enthalten, das als ein Objekt definiert ist, das nicht von einem Sensor (211-215) erfasst wird, und
wobei das Festlegen ein Festlegen eines Punktes, an dem sich das verborgene Objekt befindet, in dem Lichtbestrahlungsbereich (1320) durch den mindestens einen Prozessor umfasst.

6. Verfahren nach Anspruch 5, wobei die elektronischen Horizontdaten Horizontkartendaten und Horizontpfaddaten umfassen; und
wobei das Festlegen ein Festlegen von zumindest einem Teil eines Hauptpfades und eines Nebenpfades der Horizontpfaddaten in zumindest einem von einem Schnittpunkt (810) und einer Kreuzung, die in den Horizontkartendaten angegeben sind, in dem Lichtbestrahlungsbereich (820) umfasst.

7. Verfahren nach Anspruch 5, wobei die elektronischen Horizontdaten Informationen über mindestens ein Verkehrszeichen (1010, 1110), das Informationen anzeigt, eine Geschwindigkeitskamera oder eine Bodenwelle umfassen; und
wobei das Festlegen ein Festlegen mindestens eines der folgenden Elemente in dem Lichtabstrahlungsbereich (1020, 1120) durch den mindestens einen Prozessor umfasst: ein Verkehrszeichen (1010, 1110), die Geschwindigkeitskamera und die Bodenwelle.

8. Verfahren nach Anspruch 5, wobei die elektronischen Horizontdaten dynamische Daten umfassen, die Informationen (1210) über mindestens eines der folgenden Elemente enthalten: Schlagloch, rutschige Straße, Straßenrand oder Glatteis; und
wobei das Festlegen ein Festlegen, durch den mindestens einen Prozessor, eines der Elemente Schlagloch, rutschige Straße, Gelände oder Glatteis in einem Lichtbestrahlungsbereich (1220) umfasst.

## Revendications

1. Dispositif électronique (100) pour un véhicule (10), comprenant:
un bloc d'alimentation (190) conçu pour alimenter en électricité;
une interface (180) configurée pour recevoir des données de carte (351-355; 361-371) haute résolution, carte HD, d'une région spécifique provenant d'un serveur (21) par l'intermédiaire d'un dispositif de communication (220); et
au moins un processeur (170) configuré pour générer en continu des données d'horizon électronique de la région spécifique sur la base des données de carte HD (351-355; 361-371) lorsqu'il se trouve dans un état dans lequel l'électricité est reçue, et pour définir une région de rayonnement lumineux d'un phare sur la base des données d'horizon électronique,
**caractérisé en ce que** les données d'horizon électronique comprennent des données dynamiques comprenant des informations sur un objet caché (1310) défini comme un objet qui n'est pas détecté par un capteur (211-215), et
dans lequel le processeur (170) est configuré pour définir un point au niveau duquel l'objet caché est situé par rapport à la région de rayonnement lumineux (1320).

2. Dispositif électronique selon la revendication 1, dans lequel les données d'horizon électronique comprennent des données de carte d'horizon et des données de chemin d'horizon; et
dans lequel le processeur (170) est configuré pour définir au moins certain parmi un chemin principal et un chemin secondaire des données de chemin d'horizon dans au moins l'un parmi un croissement (810) ou un carrefour spécifié dans les données de carte d'horizon par rapport à la région de rayonnement lumineux (820).

3. Dispositif électronique selon la revendication 1, dans lequel les données d'horizon électronique comprennent des données d'objet statique comprenant des informations sur au moins l'un parmi un panneau de signalisation (1010; 1110) indiquant des informations, une caméra de contrôle de la vitesse ou une bosse; et
dans lequel le processeur (170) est configuré pour définir au moins l'un parmi le panneau de signalisation, la caméra de contrôle de la vitesse ou la bosse par rapport à la région de rayonnement lumineux (1020, 1120).

4. Dispositif électronique selon la revendication 1, dans lequel les données d'horizon électronique comprennent des données dynamiques comprenant des informations (1210) sur au moins l'un parmi un nids de poule, une route glissante, une voie hors route, le verglas; et
dans lequel le processeur (170) est configuré pour définir au moins l'un parmi un nids de poule, une route glissante, une voie hors route, le verglas par rapport à la région de rayonnement lumineux (1220).

5. Procédé de fonctionnement d'un dispositif électronique pour un véhicule, le procédé comprenant:
la réception (S710) d'alimentation électrique par au moins un processeur;
la réception (S720) de données de carte haute définition, carte HD, d'une région spécifique provenant d'un serveur par communication dans un état dans lequel l'alimentation électrique est reçue, par l'au moins un processeur;
la génération (S730) de données d'horizon électronique de la région spécifique sur la base des données de carte HD dans l'état dans lequel l'alimentation électrique est reçue, par l'au moins un processeur; et
la définition (S740) d'une région de rayonnement lumineux d'un phare sur la base des données d'horizon électronique, par l'au moins un processeur,
dans lequel les données d'horizon électronique comprennent des données dynamiques comprenant des informations sur un objet caché (1310) défini comme un objet qui n'est pas détecté par un capteur (211-215), et
dans lequel la définition consiste à définir un point au niveau duquel l'objet caché est situé par rapport à la région de rayonnement lumineux (1320), par l'au moins un processeur.

6. Procédé selon la revendication 5, dans lequel les données d'horizon électronique comprennent des données de carte d'horizon et des données de chemin d'horizon; et
dans lequel la définition consiste à définir au moins certain parmi un chemin principal et un chemin secondaire des données de chemin d'horizon dans au moins l'une parmi un croisement (810) ou un carrefour spécifié dans les données de carte d'horizon par rapport à la région de rayonnement lumineux (820).

7. Procédé selon la revendication 5, dans lequel les données d'horizon électronique comprennent des informations sur au moins l'un parmi un panneau de signalisation (1010; 1110) indiquant des informations, une caméra de contrôle de la vitesse ou une bosse; et
dans lequel la définition consiste à définir au moins l'un parmi le panneau de signalisation (1010, 1110), la caméra de contrôle de la vitesse ou la bosse dans la région de rayonnement lumineux (1020, 1120), par l'au moins un processeur.

8. Procédé selon la revendication 5, dans lequel les données d'horizon électronique comprennent des données dynamiques comprenant des informations (1210) sur au moins l'un parmi un nids de poule, une route glissante, une voie hors route, le verglas; et
dans lequel la définition consiste à définir au moins l'un parmi un nids de poule, une route glissante, une voie hors route, le verglas par rapport à la région de rayonnement lumineux (1220), par l'au moins un processeur.
